# EUROPEAN PATENT SPECIFICATION

(11) **EP 1 611 946 B1**
(45) Date of publication and mention of the grant of the patent: **27.07.2011**
(21) Application number: 05364017.3
(22) Date of filing: 20.06.2005
(51) Int. Cl.: B01J 13/14, A01N 25/28

(54) **Microcapsule emulsion and method for producing the same**
Mikrokapselemulsion und Herstellungsverfahren
Emulsion de microcapsules et son procédé de préparation

(30) Priority: 21.06.2004 JP 2004182098
(43) Date of publication of application: 04.01.2006
(73) Proprietor: Nissin Chemical Industry Co., Ltd., Takefu-shi, Fukui-ken (JP); Shin-Etsu Chemical Co., Ltd., Chiyoda-ku, Tokyo (JP)
(72) Inventor: Yokoyama, Hiroshi, Takefu-shi Fukui-ken (JP); Kinoshita, Kouji, Takefu-shi Fukui-ken (JP); Fukumoto, Takehiko, Shin-Etsu Chem. Co., Ltd., Kubiki-ku Joetsu-shi Niigata-ken (JP); Saguchi, Ryuichi, Shin-Etsu Chem. Co., Ltd., Kubiki-ku Joetsu-shi Niigata-ken (JP); Hojo, Tatsuya, Shin-Etsu Chem. Co., Ltd., Kubiki-ku Joetsu-shi Niigata-ken (JP); Kobayashi, Toshimi, Chiyoda-ku Tokyo (JP); Ogawa, Kinya, Chiyoda-ku Tokyo (JP)
(74) Representative: Larcher, Dominique

(56) References cited:
- EP-A- 1 230 855
- US-A- 4 923 894
- US-A- 5 460 817

## Description

### BACKGROUND OF THE INVENTION

### 1. Field of the Invention

The present invention relates to microcapsule emulsion which can release almost all the amount of a biological active substance such as sex pheromone substance contained therein at a constant release rate over a prolonged period, prevent decline in release life at the time of dilution, facilitate spraying or dispersing, and impart a function such as adhesion; and a method for producing the microcapsule emulsion.

### 2. Description of the Related Art

In recent years, there has been a demand for the development of a sustained release preparation containing a biological active substance such as sex pheromone substance, pharmaceutical, agrichemical or perfume. There has been proposed a number of methods including a method for producing a sustained release preparation having a sex pheromone substance microencapsulated with a cellulose derivative according to Japanese Patent Application Unexamined Publication No. 58-183601/1983; a method for producing a sustained release preparation comprising steps of impregnating sex phero0mone substance in pellets of a synthetic resin having compatibility with the sex pheromone substance, pulverizing the resulting pellets, and covering the surface of the resulting powder with an inorganic powder or a synthetic resin having no compatibility with the sex pheromone substance according to Japanese Patent Application Unexamined Publication No. 6-192024/1994; and a method for producing a sustained release preparation comprising a step of mixing synthetic resin pellets containing sex pheromone substance with an O/W type acrylic adhesive emulsion to suspend the former in the latter Japanese Patent Application Unexamined Publication No. 7-231743/1995.

The microencapsulated sustained release preparation and the sustained release preparation comprising a biological active substance in an acrylic emulsion as disclosed in Japanese Patent Application Unexamined Publication No. 58-183601/1983 exhibit a short release life of the sex pheromone substance. The extension of the release life results in the large particle size of the microcapsule, making spraying difficult.

The sustained release preparation as disclosed in Japanese Patent Application Unexamined Publication No. 6-192024/1994 is accompanied with a problem that a larger release amount of the sex pheromone substance at an early stage of releasing, while an extremely smaller release amount thereof at the later stage where the remaining amount is as much as 10 to 40 wt%. Thus, there is a substantial loss of the pheromone substance.

The sustained release preparation as disclosed in Japanese Patent Application Unexamined Publication No. 7-231743/1995 has, in addition to the above problem, problems such as a high possibility of uneven spraying or dispersing because of poor water dispersibility of the preparation and necessity of a further mixing step.

A method for producing a water dispersion type sustained release preparation comprising a biological active substance in an interpenetrating polymer network (which will hereinafter be abbreviated as "IPN") is reported in WO01/37660A1. The preparation comprises a first step of forming an emulsion by emulsion copolymerization in the presence of a component selected from photoinitiator-containing (meth)acrylate ester monomer or radically polymerizable organic peroxide, monomer components of alkyl (meth)acrylate ester monomer, multifunctional (meth)acrylate ester monomer and an optional hydrophilic monomer, and a biological active substance; and a second step of further polymerization by adding alkyl (meth)acrylate ester monomer and multifunctional (meth)acrylate ester monomer to the emulsion obtained in the first step. The term "(meth)acrylate" means acrylate and/or methacrylate and the term "alkyl (meth)acrylate" means alkyl acrylate and/or alkyl methacrylate.

However, the water dispersion type sustained release preparation making use of IPN is considerably susceptible to dilution with water so that the biological active substance diluted in water has a shortened release life.

### SUMMARY OF THE INVENTION

An object of the present invention is to provide a microcapsule emulsion which can release almost all the amount of a biological active substance comprised therein at a constant release rate over a prolong period, can prevent decline of release life at the time of dilution, can facilitate spraying or dispersing, and can impart a function such as adhesion.

In one aspect of the present invention, there is provided a microcapsule emulsion comprising:
an emulsion particle formed by emulsion polymerization of a total amount of 15 to 90 parts by weight of a first monofunctional alkyl (meth)acrylate ester and a first multifunctional (meth)acrylate ester in the presence of 100 parts by weight of a biological active substance, and
a coated layer on the emulsion particle, the layer being formed by emulsion polymerization of a total amount of 20 to 200 parts by weight of a second monofunctional alkyl (meth)acrylate ester and a second multifunctional (meth)acrylate ester in the presence of the emulsion particle,
wherein difference in carbon numbers between an alkyl group of the first monofunctional alkyl (meth)acrylate ester and an alkyl group of the second monofunctional alkyl (meth)acrylate ester is from 3 to 17.

In another aspect of the present invention, there is also provided a method for producing a microcapsule emulsion comprising:
a first step of forming an emulsion particle by emulsion polymerization of a total amount of 15 to 90 parts by weight of a first monofunctional alkyl (meth)acrylate ester and a first multifunctional (meth)acrylate ester in the presence of 100 parts by weight of a biological active substance,
a second step of forming on the emulsion particle a coated layer by emulsion polymerization of a total amount of 20 to 200 parts by weight of a second monofunctional alkyl (meth)acrylate ester and a second multifunctional (meth)acrylate ester in the presence of the emulsion particle,
wherein difference in carbon numbers between an alkyl group of the first monofunctional alkyl (meth)acrylate ester and an alkyl group of the second monofunctional alkyl (meth)acrylate ester is from 3 to 17.

The alkyl group may include straight chain and branched chain and the like.

According to the present invention, the microcapsule emulsion can release almost all the amount of a biological active substance such as sex pheromone substance comprised in the microcapsule at a constant release rate over a prolonged period even if the substance is diluted. The microcapsule can also prevent decline of the release life at the time of dilution, facilitate spraying or dispersing, and impart a function such as adhesion.

### DETAILED DESCRIPTION OF THE INVENTION

The present invention will hereinafter be described in detail.

The present invention can provide a microcapsule emulsion wherein an emulsion particle, formed by emulsion polymerization of a first monofunctional alkyl (meth)acrylate ester (Component A) and a first multifunctional (meth)acrylate ester (Component B) in the presence of a biological active substance, is covered with a coated layer, the layer being formed by emulsion polymerization of a second monofunctional alkyl (meth)acrylate ester (Component D) and a second multifunctional (meth)acrylate ester (Component E). Because the difference in carbon numbers between the alkyl group of Component A and the alkyl group of Component D is from 3 to 17, in an example in which the biological active substance is sex pheromone, the coated layer can be made lower than the polymer inside the coated layer regarding the compatibility with the biological active substance. Since the microcapsule has such a structure, it can be prepared to have uniform quality and can have uniform release performance and long release life. That is, even after more than half of the biological active substance is released, uniform release can be maintained because the inside of the coated layer is wetted with the biological active substance. The coated layer comprises a polymer having lower compatibility with the biological active substance so that the film form of preparation can control sustained release and markedly prolonged release life can be achieves in comparison with the conventional emulsion type preparation. In particular, a microcapsule having been subjected to polymerization at a third step, which will be described later, can be free from a drastic reduction in the release life even if diluted with water, being contrary to the ordinary emulsion type or IPN type sustained release preparation.

The biological active substance to be used in the present invention may include, but not limited to, sex pheromone substances, agrichemicals and perfumes. Specific examples of the sex pheromone substance may include pheromones such as 14-methyl-1-octadecene, Z9-tricosene, E4-tridecenyl acetate, dodecyl acetate, Z7-dodecenyl acetate, Z8-dodecenyl acetate, Z9-dodecenyl acetate, E7,Z9-dodecadienyl acetate, Z9-tetradecenyl acetate, E11-tetradecenyl acetate, Z11-tetradecenyl acetate, Z9,E11-tetradecadienyl acetate, Z9,E12-tetradecadienyl acetate, Z11-hexadecenyl acetate, Z7, Z/E11-hexadecadienyl acetate, Z13-hexadecenyl acetate, Z13-octadecenyl acetate, E13, Z13-octadecadienyl acetate, Z11-hexadecenal, Z13-octadecenal, Z13-icosen-10-one, 7,8-epoxy-2-methyloctadecane and 8-methyl-2-decyl propionate.

Specific examples of the agrichemical may include those having a relatively high vapor pressure (substances having a boiling point of 20 to 250°C under reduced pressure of 1 mmHg) such as diazinone and propylene glycol monofatty acid esters.

Specific examples of the perfume may include esters of linanol, esters of cis-3-hexenol and irones.

The biological active substance may be used singly or as a mixture. When the mixture is used, a plurality of biological active substances may be charged in a microcapsule or microcapsules synthesized separately may be mixed.

The monofunctional alkyl (meth)acrylate ester monomer (Component A) may preferably include the monomer having an alkyl group of 4 to 20 carbon atoms. Specific examples may include butyl (meth)acrylate, hexyl (meth)acrylate, n-octyl (meth)acrylate, 2-ethylhexyl (meth)acrylate, lauryl (meth)acrylate, cetyl (meth)acrylate, and stearyl (meth)acrylate. The monomer may be used singly or as an admixture of two or more.

Examples of the multifunctional (meth)acrylate ester monomer (Component B) may include any monomer containing two or more radically polymerizable functional groups such as vinyl groups. The polymer produced by polymerization of Components A and B contains a portion derived from Component A which can is considered to contribute to wetting with a biological active substance, and a portion derived from Component B which is considered to contribute to sustainment of the biological active substance.

Examples of the multifunctional (meth)acrylate ester monomer (Component B) may include ethylene glycol di(meth)acrylate, diethylene glycol di(meth)acrylate, triethylene glycol di(meth)acrylate, polyethylene glycol di(meth)acrylate, 1,3-butylene glycol di(meth)acrylate, 1,4-butanediol di(meth)acrylate, 1,6-hexanediol di(meth)acrylate, neopentyl glycol di(meth)acrylate, diacryl phthalate, allyl (meth)acrylate, 2-hydroxy-1,3-di(meth)acryloxypropane, 2,2-bis(4-((meth)acryloxyethoxy)phenyl)propane, trimethylolpropane tri(meth)acrylate, tetramethylolmethane (meth)acrylate, pentaerythritol tri(meth)acrylate, dipentaerythritol tri(meth)acrylate, pentaerythritol penta(meth)acrylate, dipentaerythritol hexa(meth)acrylate, and tetramethylolmethane tetra(meth)acrylate. The monomer may be used singly or as a admixture of two or more.

The amount of the alkyl (meth)acrylate monomer (Component A) may be typically from 80 to 99.9 wt%, especially preferably from 80 to 98 wt% based on the total amount of the monomers used in the first step. When the amount is less than 80 wt%, the sustained release preparation obtained may not stably maintain the biological active substance therein. When the amount exceeds 99.9 wt%, emulsification may be unstable so that coagulation tends to occur.

The amount of the multifunctional (meth)acrylate ester monomer (Component B) may be typically from 0.1 to 20 wt%, especially preferably from 2 to 20 wt% based on the total amount of the monomers used in the first step. When the amount is less than 0.1 wt%, the sustained release rate may be too high. When the amount exceeds 20 wt%, the release of the biological active substance may be prevented so that its remaining amount tends to increase.

The total amount of the monomers of Components A and B used in the first step may be preferably from 15 to 90 parts by weight, especially preferably from 30 to 70 parts by weight based on 100 parts by weight of the biological active substance. When the amount of the monomers is less than 15 parts by weight, an emulsion particle itself may become unstable, and dilution with water or with another emulsion may make the emulsion itself unstable. When the amount exceeds 90 parts by weight, the polymerization may take place only at the surface of the emulsion particle in the second step, making it difficult to form a portion mainly comprising the biological active substance inside the coated layer. In other words, when the concentration of the biological active substance is low, the polymer inside the coated layer remains un-copolymerized with the monomer for forming the coated layer. At this site, the biological active substance remains kneaded in the polymer, causing a reduction of liquid form of biological active substance. Accordingly, no liquid form of the biological active substance remains upon completion of the emission of 30 to 50 wt% of the biological active substance so that the release at a later stage may become non-uniform.

A hydrophilic monomer (Component C) which is soluble in water at a desired ratio may be added to Components A and B for copolymerization for the purpose of improving the stability of the emulsion. This can form orientation of a hydrophilic component on the surface of the polymer (particle) surface, leading to heightening of water dispersibility.

Specific examples of the hydrophilic monomer (Component C) may include unsaturated monocarboxylic acid monomer such as (meth)acrylic acid, itaconic acid, crotonic acid, fumaric acid, maleic acid, mesaconic acid, citraconic acid and 6-(meth)acryloyloxyethyl hydrogen succinate; unsaturated acid anhydride monomer such as maleic anhydride, itaconic anhydride, citraconic anhydride and 4-methacryloxyethyltrimellitic anhydride; phenol-containing monomer such as hydroxyphenoxyethyl (meth)acrylate, hydroxyphenoxy polyethylene glycol (meth)acrylate having 2 to 90 moles of ethylene oxide, hydroxyphenoxy polypropylene glycol (meth)acrylate having 2 to 50 moles of propylene oxide, hydroxyphenoxy polyethylene polypropylene glycol (meth)acrylate having 3 to 90 moles of both ethylene oxide and propylene oxide wherein the amount (mole) of the ethylene oxide is greater than that of the propylene oxide, vinyl phenol and hydroxyphenyl maleimide; sulfonic acid-containing monomer such as sulfoxyethyl (meth)acrylate, styrenesulfonic acid, acrylamido-t-butylsulfonic acid and (meth)allylsulfonic acid; phosphoric acid-containing monomer such as mono-2-(meth)acryloyloxyethyl acid phosphate; (meth)acrylamide monomer such as N,N-dimethyl (meth)acrylamide, N,N-diethyl (meth)acrylamide, N-isopropyl (meth)acrylamide, acryloylmorpholine, N,N-dimethylaminopropyl (meth)acrylamide, (meth)acrylamide and N-methylol (meth)acrylamide; aminoalkyl (meth)acrylate monomer such as N,N-diethylaminoethyl (meth)acrylate and N,N-dimethylaminoethyl (meth)acrylate; hydroxyalkyl (meth)acrylate monomer such as 2-hydroxyethyl (meth)acrylate, 2-hydroxypropyl (meth)acrylate and 2,3-dihydroxypropyl (meth)acrylate; polyoxyethylene mono(meth)acrylate monomer such as polyethylene glycol mono(meth)acrylate having 2 to 98 moles of ethylene oxide, methoxypolyethylene glycol mono(meth)acrylate having 2 to 98 moles of ethylene oxide, phenoxypolyethylene glycol (meth)acrylate having 2 to 98 moles of ethylene oxide, nonylphenol monoethoxylate (meth)acrylate having 1 to 4 moles of ethylene oxides, methoxyethyl acrylate and ethoxy diethylene glycol (meth)acrylate; acid group-containing monomer such as sodium (meth)acrylate, sodium styrenesulfonate, sodium acrylamido-t-butylsulfonate, and sodium acrylamido-2-methylpropanesulfonate; quaternary ammonium base-containing (meth)acrylate monomer such as hydroxypropyl trimethylammonium chloride (meth)acrylate; (meth)allyl compound monomer such as allyl glycol, polyethylene glycol mono(meth)allyl ether having 3 to 32 moles of ethylene oxide and methoxypolyethylene glycol monoallyl ether; cyclic heterocycle-containing compound monomer such as N-vinylpyrrolidone and N-vinyl caprolactam; and vinyl cyanide monomer such as acrylonitrile, methacrylonitrile and vinylidene cyanide.

The amount of the hydrophilic monomer (Component C) may be typically from 0 to 20 wt%, preferably from 1 to 5 wt% based on the total amount of the monomers used in the first step. When the amount exceeds 20 wt%, it may become difficult to sustain the biological active substance stably in the sustained release preparation.

As the monomer component used in the first step, another monomer, for example, an aromatic vinyl monomer such as styrene, α-methylstyrene or vinyl toluene or vinyl ester monomer such as vinyl acetate, vinyl propionate, vinyl butyrate, vinyl pivalate, vinyl laurate or vinyl versatate may be added to an extent not impairing the function of the emulsion particle prior to being coated.

The polymer which constitutes the coated layer of the emulsion particle, is added in order to control the release of the biological active substance and impart stability to the particle. This polymer is therefore selected in accordance with the criteria different from that employed before coating.

The monomer capable of forming the coated layer is required to be selected from monomer capable of partially dissolving or swelling the emulsion particle before being coated. If it is not able to partially dissolve or swell the emulsion particle before being coated, the possibility of polymerization outside the emulsion particle enhances so that the coated layer having good quality cannot be formed.

According to the present invention, a second monofunctional alkyl (meth)acrylate ester (Component D) and a second multifunctional (meth)acrylate ester (Component E) are added to the emulsion particle formed in the first step and emulsion-polymerized to produce a coated layer on the emulsion particle. Because the difference in carbon numbers between the alkyl group of Component A and the alkyl group of Component D is 3 to 17, the coated layer can be made lower than the polymer inside the coated layer in terms of compatibility with the biological active substance. The difference in carbon numbers between the alkyl group of Component A and the alkyl group of Component D may be more preferably 3 to 5.

An increase in the amount of the monomer capable of forming a polymer layer having low compatibility may heighten the density of microcell so that the release rate becomes lower. On the other hand, a decrease in the amount can lower the density of microcell so that the release rate becomes higher, whereby the biological active substance in almost the liquid form does not exist sufficiently inside the microcapsule.

The monofunctional alkyl (meth)acrylate ester monomer (Component D) may preferably include alkyl (meth)acrylate having an alkyl group of 1 to 8 carbon atoms. Specific examples may include methyl (meth)acrylate, ethyl (methyl)acrylate, propyl (meth)acrylate, butyl (meth)acrylate, pentyl (meth)acrylate, hexyl (meth)acrylate, n-octyl (meth)acrylate and 2-ethylhexyl (meth)acrylate. It may be used singly or as an admixture of two or more.

Components A and D may be selected in view of compatibility with the biological active substance. For example, when the biological active substance has high oil solubility, hexyl (meth)acrylate, n-octyl (meth)acrylate or 2-ethylhexyl (meth)acrylate can be selected as Component D because it can form the polymer having low compatibility with the substance. When the biological active substance is a highly polar substance, the above-described monomer is selected as Component A because it can form a polymer having high compatibility with the substrate. The difference in carbon numbers between the alkyl group of Component A and the alkyl group of Component D is from 3 to 17 so that such a selection can be done.

The specific examples of the multifunctional (meth)acrylate ester monomer (Component E) may be any monomer having two or more radically polymerizable groups such as viny groups. The specific examples of the multifunctional (meth)acrylate ester monomer (Component E) may include those mentioned as examples of Component B.

The amount of the monofunctional alkyl (meth)acrylate ester monomer (Component D) may be typically from 60 to 99.9 wt%, especially preferably from 70 to 99 wt% based on the total amount of the monomer component constituting the coated layer of the microcapsule.

The amount of the multifunctional (meth)acrylate ester monomer (Component E) may be typically from 0.1 to 40 wt%, preferably from 1 to 20 wt% based on the total amounts of the monofunctional alkyl (meth)acrylate ester monomer (Component D) and the multifunctional (meth)acrylate ester monomer (Component E). Outside the above-described range, good sustained release performance and an additional function such as adhesion may not be obtained.

The total amount of the monomers for forming the coated layer in the second step may be preferably from 20 to 200 parts by weight, especially preferably from 50 to 140 parts by weight on basis of 100 parts by weight of the biological active substance. When the amount of the monomers is less than 20 parts by weight, the formation of stable microcapsules may become difficult. When the amount exceeds 200 parts by weight, the release rate may decline or the amount left unreleased may increase.

The monomer component for forming the coated layer in the second step may comprise another monomer, for example, the above-described hydrophilic monomer (Component C) to an extent not damaging the function of the coated layer.

The microcapsule emulsion thus obtained may have a solid content (solid content not containing the biological active substance) of typically from 10 to 65 wt%, especially preferably from 20 to 60 wt% in the form of water dispersion. The microcapsule may have an average particle diameter of typically from 10 to 1000 nm, especially preferably from 50 to 700 nm.

According to the present invention, when the microcapsule emulsion obtained is used as a sustained control preparation, the pH of the emulsion may be optionally adjusted with an alkaline substance such as an ammonia water or sodium hydroxide in order to improve the water dispersibility of the sustained control preparation and prevent degeneration of the biological active substance. In this case, the pH may be adjusted to fall within a range of typically from 2 to 9, preferably from 3 to 8, more preferably from 3.5 to 7.5. Outside this pH range, the stability of the emulsion may be damaged.

When the microcapsule emulsion of the present invention is used as a sustained release preparation, it can be used in any of the following forms: an aqueous dispersion state as emulsion, a powder obtained by drying the emulsion, and film obtained from the emulsion. The sustained release preparation in the dry form can be obtained from the aqueous dispersion by any ordinarily employed method for removing water.

The microcapsule emulsion of the present invention exhibits superior sustained-release performance to the prior art. According to the present invention, the release amounts of the biological active substance such as sex pheromone at an early stage and at a later stage can be maintained at a similar level.

A method for producing the microcapsule emulsion according to the present invention will next be described.

In the first step, for example, an emulsion may be obtained by emulsion copolymerization using the monomer component comprising the monofunctional alkyl (meth)acrylate ester monomer (Component A), the multifunctional (meth)acrylate ester monomer (Component B), and the optional hydrophilic monomer (Component C), as well as the biological active substance, a surfactant, a polymerization initiator, a photopolymerization initiator and water.

First, the monomer component comprising the monofunctional alkyl (meth)acrylate ester monomer (Component A), the multifunctional (meth)acrylate ester monomer (Component B), and the optional hydrophilic monomer (Component C); the biological active substance; a surfactant; a photopolymerization initiator and; water may be pre-emulsified in a stirrer having a high shear force such as homomixer so as to be uniformly emulsified and dispersed (the solution obtained in such a manner will hereinafter be called "pre-emulsion"). This pre-emulsion may be added dropwise to water containing a polymerization initiator to effect emulsion copolymerization. At this stage, the biological active substance is being incorporated in the first layer of the microcapsule as the polymerization progresses. The polymerization initiator and photopolymerization initiator may be added in advance during the preparation of the pre-emulsion.

The surfactant may include, but not limited to, an anionic surfactant, a nonionic surfactant, a cationic surfactant, an amphoteric surfactant, a high molecular surfactant and a reactive emulsifier. Of these, anionic surfactant and an nonionic surfactant may be especially preferable.

Examples of the anionic surfactant may include alkali metal alkyl sulfates such as sodium dodecyl sulfate and potassium dodecyl sulfate; ammonium alkyl sulfates such as ammonium dodecyl sulfate; sodium dodecyl polyglycol ether sulfate; alkylsulfonates such as alkali metal salt of sulfonated paraffin and ammonium salt of sulfonated paraffin; fatty acid salts such as sodium laurate, triethanolamine oleate and triethanolamine abietate; alkylaryl sulfonates such as sodium dodecylbenzene sulfonate and alkali metal sulfates of alkali phenol hydroxyethylene; higher-alkylnaphthalenesulfonate salts; naphthalenesulfonic acid-formalin condensation products; dialkylsulfosuccinate salts such as sodium dioctylsulfosuccinate; polyoxyethylene alkyl ether sulfate salts; polyoxyethylene alkylphenyl ether sulfate salts; and polyoxyethylene alkyl aryl sulfate salts.

Examples of the nonionic surfactant may include polyoxyethylene alkyl ethers, polyoxyethylene alkyl aryl ethers, sorbitan fatty acid esters, polyoxyethylene sorbitan fatty acid esters, fatty acid monoglycerides such as glycerol monolaurate, poly(oxyethylene-oxypropylene) copolymers, and condensation products between ethylene oxide and fatty acid amine, amide or acid.

Examples of the cationic surfactant may include octadecylamine acetate, dodecyltrimethylammonium chloride, hexadecyltrimethylammonium chloride, tetradecyldimethylbenzylammonium chloride, octadecyldimethylbenzylammonium chloride and dioleyldimethylammonium chloride.

Examples of the amphoteric surfactant may include dimethyl lauryl betaine, lauryl diaminoethyl glycine sodium, amidobetaine surfactants and imidazoline surfactants.

Examples of the high-molecular surfactant may include water soluble polymers such as poly(vinyl alcohol), poly(sodium (meth)acrylate), poly(potassium (meth)acrylate), poly(ammonium (meth)acrylate), poly(hydroxyethyl (meth)acrylate) and poly(hydroxypropyl (meth)acrylate).

Examples of the reactive emulsifier may include "LATEMUL S-180 or S-180A" (product of Kao Corporation), "Aquaron RN series or HS series" and "New Frontier A-229E or N-177E" (each, product of Dai-ichi Kogyo Seiyaku Co., Ltd.), "Antox MS-60, MS-2N, RA-1120, RA-2614, RMA-564, RMA-568 or RMA1114" (each, product of Nippon Nyukazai Co., Ltd.), "ADEKA REASOAP NE-10, NE-20 or NE-40" (each, product of Asahi Denka Co., Ltd.), and "NK Ester MG20G, M-40G, M-90G or M-230G" (each, product of Shin-Nakamura Chemical Co., Ltd.).

The surfactant may be used singly or as an admixture of two or more. The amount may be preferably from 0.1 to 20 parts by weight, more preferably from 0.5 to 10 parts by weight based on 100 parts by weight of the total amount of the monomer or monomers used in the first step. When the amount is less than 0.1 part by weight, emulsion may become unstable so that coagulation may take place. When the amount exceeds 20 parts by weight, the viscosity of the emulsion may increase.

The polymerization initiator may include, but not limited to, sodium persulfate, potassium persulfate, ammonium persulfate, acetyl peroxide, isobutyl peroxide, octanoyl peroxide, decanoyl peroxide, lauroyl peroxide, 3,3,5-trimethylhexanoyl peroxide, benzoyl peroxide, diisopropylperoxy dicarbonate, t-butylperoxyacetate, t-butylperoxymaleic acid, 2,2-azobis(isobutyronitrile), 2,2-azobis(2-methylbutyronitrile), 2,2-azobis(2,4-dimethylvaleronitrile), 2,2-azobis(4-methoxy-2,4-dimethylvaleronitrile), 1,1-azobis(cyclohexane-1-carbonitrile), 2-(carbamoylazo)isobutyronitrile, 2,2-azobis{2-[N-(4-chlorophenyl)amidino]propane} dihydrochloride, 2,2-azobis[2-(N-phenylamidino)propane] dihydrochloride, 2,2-azobis{2-[N-(4-hydroxyphenyl)amidino]propane} dihydrochloride, 2,2-azobis[2-(N-benzylamidino)propane] dihydrochloride, 2,2-azobis[2-(N-allylamidino)propane] dihydrochloride, 2,2-azobis(2-amidinopropane)dihydrochloride, 2,2-azobis{2-[N-(2-hydroxyethyl)amidino]propane} dihydrochloride, 2,2-azobis[2-(5-methyl-2-imidazolin-2-yl)propane] dihydrochloride, 2,2-azobis[2-(2-imidazolin-2-yl)propane] dihydrochloride, 2,2-azobis[2-(4,5,6,7-tetrahydro-1H-1,3-diadipin-2-yl)propane] dihydrochloride, 2,2-azobis[2-(3,4,5,6-tetrahydropyrimidin-2-yl)propane] dihydrochloride, 2,2-azobis[2-(5-hydroxy-3,4,5,6-tetrahydropyrimidin-2-yl)propane] dihydrochloride, 2,2-azobis{2-[1-(2-hydroxyethyl)-2-imidazolin-2-yl]propane} dihydrochloride, 2,2-azobis[2-(2-imidazolin-2-yl)propane], 2,2-azobis{2-methyl-N-[1,1-bis(hydroxymethyl)-2-hydroxyethyl]propionamide}, 2,2-azobis[2-methyl-N-(2-hydroxyethyl)-propionamide), 2,2-azobis{2-methyl-N-[1,1-bis(hydroxymethyl)ethyl]propionamide}, 2,2-azobis(2-methylpropionamide) dihydrate, 4,4'-azobis(4-cyanovaleric acid), and 2,2-azobis[2-(hydroxymethyl)propionitrile].

Preferred examples of the polymerization initiator for attaining good polymerization stability may include sodium persulfate, potassium persulfate, ammonium persulfate, acetyl peroxide, isobutyl peroxide, 3,3,5-trimethylhexanoyl peroxide, benzoyl peroxide, diisopropylperoxy dicarbonate, tertiary butyl peroxymaleic acid, 2,2-azobis(2-methylbutyronitrile), 2-(carbamoylazo)isobutyronitrile, 2,2-azobis[2-(N-phenylamidino)propane} dihydrochloride, 2,2-azobis{2-[N-(4-hydroxyphenyl)amidino]propane} dihydrochloride, 2,2-azobis[2-(N-benzylamidino)propane] dihydrochloride, 2,2-azobis(2-amidinopropane) dihydrochloride, 2,2-azobis{2-[N-(2-hydroxyethyl)amidino]propane} dihydrochloride, 2,2-azobis[2-(2-imidazolin-2-yl)propane] dihydrochloride, 2,2-azobis[2-(4,5,6,7-tetrahydro-1H-1,3-diadipin-2-yl)propane] dihydrochloride, 2,2-azobis[2-(3,4,5,6-tetrahydropyrimidin-2-yl)propane] dihydrochloride, 2,2-azobis{2-[1-(2-hydroxyethyl)-2-imidazolin-2-yl]propane} dihydrochloride, 2,2-azobis[2-(2-imidazolin-2-yl)propane], 2,2-azobis[2-methyl-N-(2-hydroxyethyl)-propionamide], 2,2-azobis{2-methyl-N-[1,1-bis(hydroxymethyl)-2-hydroxyethyl]propionamide}, 4,4'-azobis(4-cyanovaleric acid) and 2,2-azobis[2-(hydroxymethyl)propionitrile].

The amount of the polymerization initiator may be typically from 0.05 to 5 parts by weight, preferably from 0.2 to 4 parts by weight based on 100 parts by weight of the total amount of the monomers used in the first step. When the amount is less than 0.05 parts by weight, the polymerization initiation may decline. When the amount exceeds 5 parts by weight, the polymerization stability may decline.

Addition of a photoinitiator-containing (meth)acrylate monomer functioning as a photopolymerization initiator in the first step is required in order to form the microcapsule.

In the first step, it is necessary to carry out polymerization while blocking light in order to prevent generation of radicals due to the decomposition of the polymerization-initiating group.

Examples of the photopolymerization initiator may include photoinitiator-containing (meth)acrylate monomers (Component A1). Compounds represented by formulas (1) to (8) below are preferred, while those represented by the formulas (1) to (4) are especially preferred in view of the microcapsule formation.

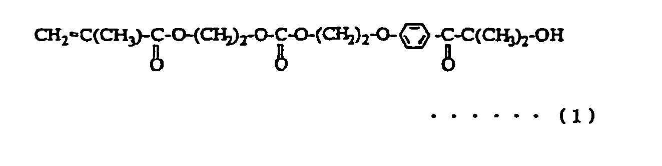

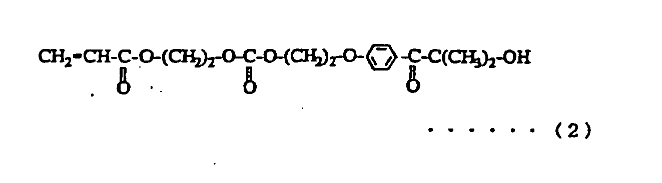

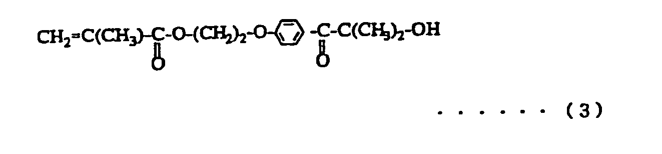

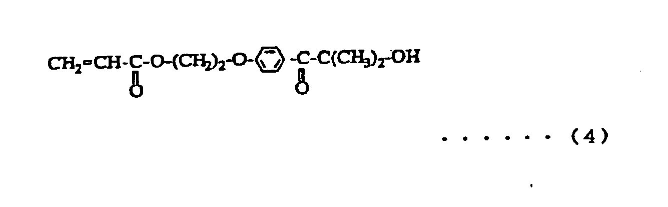

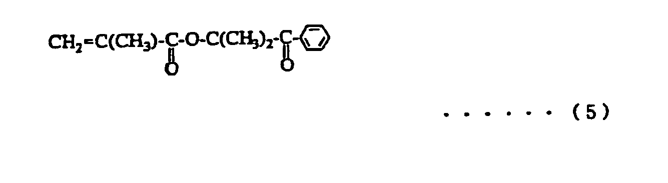

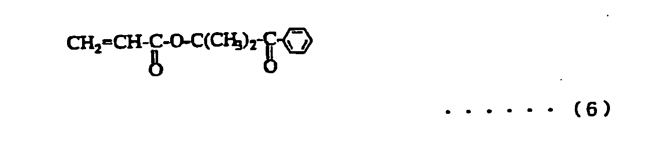

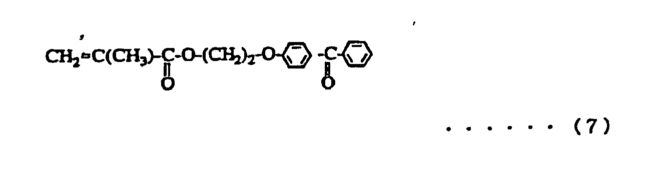

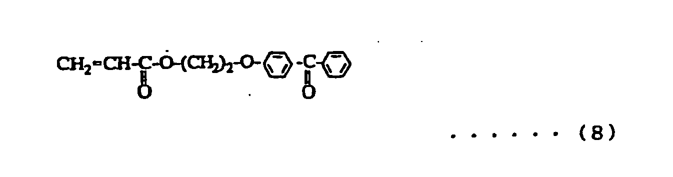

The amount of the photoinitiator-containing (meth)acrylate ester monomer as a photopolymerization initiator may be typically from 0.05 to 20 wt%, preferably from 0.1 to 15 wt% based on the total amount of the monomer component constituting the coated layer formed in the second step. When the amount exceeds 20 wt%, the photoinitiating group to be introduced into the microcapsule emulsion may cause extreme gelation at the time of the reaction so that there may be difficulty in emulsion formation.

Water may be added typically in an amount of from 60 to 250 parts by weight, preferably from 80 to 150 parts by weight, based on 100 parts by weight of the total amounts of the monomer component and the biological active substance which are used in the first step. When the amount is less than 60 parts by weight, stable formation of a microcapsule may become difficult. When the amount exceeds 250 parts by weight, the concentration of the biological active substance becomes low so that economical efficiency may be lowered.

The polymerization temperature for the emulsion polymerization may be typically from 40 to 90°C, preferably from 50 to 70°C. The polymerization time may be typically from 2 to 12 hours, preferably from 4 to 10 hours.

The second step may be a step for photopolymerization (by UV exposure) of the monomers. More specifically, for example, while or after the monofunctional alkyl (meth)acrylate ester monomer (Component D) and the multifunctional (meth)acrylate ester monomer (Component E) are added dropwise to the emulsion produced in the first step, the mixture may be photo-polymerized with stirring at room temperature (by UV exposure) without addition of a polymerization initiator or in the presence of a photoinitiator which will work in the third step.

The photopolymerization in the second step may be carried out without addition of a polymerization initiator because when photopolymerization is conducted in the presence of a photoinitiator which already exists in the emulsion particle obtained in the first step, a so-called salting-out effect takes place in the emulsion particle containing the biological active substance at a high concentration. Consequently, the biological active substance is present in liquid form. Since the biological active substance exists in the liquid form inside the coated layer, uniform release can be maintained.

On the other hand, when the potopolymerization is carried out in the second step in the presence of a polymerization initiator which will work in the third step, the polymerization initiator may be the radical initiator described below which does not decompose at the polymerization temperature of the second step but does decompose in the third step. No radical initiator will be further added in the third step because the polymerization initiator has been added in the second step.

The amount of the polymerization initiator to be added may be typically 0.05 to 5 parts by weight, preferably 0.2 to 4 parts by weight on basis of 100 parts by weight of the total monomers used in the second step. When it is less than 0.05 parts by weight, the polymerization initiation ability may lower. When it exceeds 5 parts by weight, the stability of polymerization may decline.

The polymerization temperature may be typically from 40 to 100°C, preferably from 50 to 90°C. The polymerization time may be typically from 2 to 12 hours, preferably from 4 to 10 hours.

The second step may be followed by an optional third step for further coating in which a total amount of 20 to 200 parts by weight, on basis of 100 parts by weight of the biological active substance, of a third monofunctional alkyl (meth)acrylate ester and a third multifunctional (meth)acrylate ester can be added to the emulsion produced in the second step and emulsion-polymerized at the similar temperature for the similar polymerization time to those of the second step. Consequently, the thickness of the coated layer may increase so that excellent sustained release will be attained.

In the third step, for example, monofunctional alkyl (meth)acrylate ester monomer (Component D) and multifunctional (meth)acrylate ester monomer (Component E) are added dropwise and radically polymerized in the presence of a radical polymerization initiator.

When radical polymerization is performed, a radical polymerization initiator may include t-butylperoxyacryloyloxyethyl carbonate, t-butylperoxymethacryloyloxyethyl carbonate, t-butylperoxyallyl carbonate and t-butylperoxymethacryloyl carbonate. Of these, t-butylperoxyacryloyloxyethyl carbonate or t-butylperoxymethacryloyloxyethyl carbonate may be preferred in view of the formation of a microcapsule and high decomposition-initiating temperature of peroxide bond.

The polymerization temperature for the radical polymerization may be typically from 60 to 110°C, preferably from 90 to 105°C. The polymerization time may be typically from 2 to 10 hours, preferably from 3 to 6 hours.

When photopolymerization (by UV exposure) is carried out, the third layer of the microcapsule can be formed under similar conditions to those employed in the second step for forming the second layer of the microcapsule.

According to the present invention, an emulsion not containing the biological active substance and preferably having a solid content of from 30 to 65 wt%, can be optionally added in an amount of from 1 to 40 times, more preferably from 1 to 35 times the weight of the microcapsule obtained in the second or third step.

The emulsion containing no biological active substance may be preferably an emulsion of (meth)acrylate polymer. The (meth)acrylate polymer may be preferably formed by polymerization of a mixture of alkyl (meth)acrylate wherein the alky group having 8 to 20 carbon atoms, and an optional component selected from the group consisting of alkyl (meth)acrylate wherein the alkyl group of 1 to 7 carbon atoms, multifunctional (meth)acrylate monomer (Component B) and hydrophilic monomer (Component C).

The alky (meth)acrylate wherein the alky group having 8 to 20 carbon atoms may include n-octyl (meth)acrylate, 2-ethylhexyl (meth)acrylate, decyl (meth)acrylate, lauryl (meth)acrylate, tetradecyl (meth)acrylate, hexadecyl (meth)acrylate, octadecyl (meth)acrylate and stearyl (meth)acrylate; and may be used preferably in an amount sufficient to constitute 20 to 100% by weight of said (meth)acrylate polymer.

The alkyl (meth)acrylate wherein the alky group having 1 to 7 carbon atoms may include methyl (meth)acrylate, ethyl (meth)acrylate, propyl (meth)acrylate, butyl (meth)acrylate, pentyl (meth)acrylate and hexyl (meth)acrylate; and may be used preferably in an amount sufficient to constitute 0 to 80% by weight of said (meth)acrylate polymer.

The multifunctional acrylate ester (Component B) and hydrophilic monomer (Component C) may include those examples explained above and each component may be used in an amount of 0 to 5 parts respectively by weight on basis of 100 parts by weight of the sum of alkyl (meth)acrylate wherein the alkyl has 8 to 20 carbon atoms and alkyl (meth)acrylate wherein the alkyl has 1 to 7 carbon atoms.

The polymerization condition for emulsion polymerization may be same as that in the first step.

The present invention will hereinafter be described by examples. It should be construed that the invention is not limited by the following examples.

### Example 1

In a flask equipped with a stirrer, a thermometer, a condenser, a dropping funnel and a nitrogen gas inlet tube was charged 23.7 parts by weight of deionized water. The temperature was raised to 65°C with stirring while blowing a nitrogen gas into the flask. Then, 0.2 part by weight of 2,2-azobis(2-amidinopropane) dihydrochloride (ABAPH) was added as a polymerization initiator.

In a beaker were charged 36.5 parts by weight of 7,8-epoxy-2-methyloctadecane (EMOD: sex pheromone of gypsy moth) as a biological active substance, 12.3 parts by weight of total monomer component containing a photoinitiator (see the composition in Table 1), 4.4 parts by weight of polyoxyethylene alkyl ether sulfate (POEAES) ("Persoft EL", product of NOF Corporation, anionic surfactant) and 22.9 parts by weight of deionized water. The resulting mixture was stirred with a homomixer at 10,000 rpm/min for 15 minutes at room temperature to prepare a pre-emulsion.

The pre-emulsion was added dropwise to the above-described flask over 3 hours, while keeping the temperature at 65°C. Subsequently, polymerization was performed for further 4 hours to prepare an emulsion.

To the resulting emulsion, 12.3 parts by weight of the monomer component which had been mixed in advance at the composition described in Table 2 were added dropwise and photopolymerization was performed for 3 hours to prepare a microcapsule emulsion. GC analysis was conducted to confirm that no monomer remained in the emulsion for completion of polymerization.

According to the composition and condition shown in Table 3, an emulsion was prepared. Then, 16 parts by weight of the resulting emulsion and 1 part by weight of the microcapsule emulsion were stirred at room temperature for 1 hour, whereby a mixture of the microcapsule emulsion which the emulsion had been added to was obtained.

In order to study its sustained-release performance, the mixture was applied to a polyethylene terephthalate film and dried at 25°C for 6 hours, whereby a sustained release preparation containing 20 mg of EMOD was obtained in the film form.

The resulting sustained release preparation was placed in a release tester at 30°C under wind speed of 0.7 m/sec and the release rate of EMOD from the preparation was determined by measuring a change in the weight. As a result, the sustained release preparation had uniform release even 30 days after the placement, exhibiting good sustained release properties. A remaining percentage of EMOD after 40 days was 44.4%. The preparation also exhibited a good release rate upon completion of 80% release of EMOD and no marked deterioration in release life due to dilution was observed.

### Example 2

In a flask equipped with a stirrer, thermometer, condenser, dropping funnel and nitrogen gas inlet tube was charged 14.4 parts by weight of deionized water. The temperature was elevated to 65°C with stirring while blowing a nitrogen gas into the flask. Then, 0.2 part by weight of potassium persulfate (PPS) was added as a polymerization initiator.

In a beaker were charged 40.1 parts by weight of Z7,Z/E11-hexadecadienyl acetate (PBW: sex pheromone of pink bollworm) as a biological active substance, 15.2 parts by weight of total monomer component containing a photoinitiator (see the composition in Table 1), 4.4 parts by weight of sodium dodecyl sulfate (SDS: an anionic surfactant) and 25.7 parts by weight of deionized water. The resulting mixture was stirred with a homomixer at 10,000 rpm/min for 15 minutes at room temperature to prepare a pre-emulsion.

The pre-emulsion was added dropwise to the above-described flask over 3 hours, while keeping the temperature at 80°C. Subsequently, polymerization was performed for further 4 hours to prepare an emulsion.

To the resulting emulsion, 13.0 parts by weight of the monomer component which had been mixed in advance at the composition described in Table 2 were added dropwise and photopolymerization was performed for 1 hour to prepare a microcapsule emulsion. GC analysis was conducted to confirm that no monomer remained in the emulsion for completion of polymerization.

According to the composition and condition shown in Table 3, an emulsion was prepared. Then, 35 parts by weight of the resulting emulsion and 1 part by weight of the microcapsule emulsion were stirred at room temperature for 1 hour, whereby a mixture of the microcapsule emulsion which the emulsion had been added to was obtained.

In order to study its sustained release performance, the mixture was applied to a polyethylene terephthalate film and dried at 25°C for 6 hours, whereby a sustained release preparation containing 20 mg of PBW was obtained in the film form.

The resulting sustained release preparation was placed in a release tester at 30°C under wind speed of 0.7 m/sec and the release rate of PBW from the preparation was determined by measuring a change in the weight. As a result, the sustained release preparation had uniform release even 30 days after the placement, exhibiting good sustained release properties. A remaining percentage of PBW after 40 days was 32.8%. The preparation also exhibited a good release rate upon completion of 80% release of PBW.

In Table 1, the photopolymerization initiator is a compound represented by the following formula:

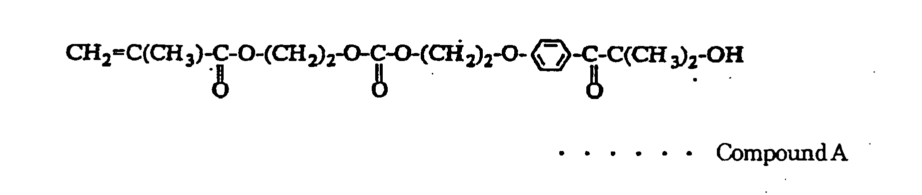

### Example 3

A strained release preparation was produced in accordance with Tables 1 to 3 in the same manner as in Example 1 and the release rate of EMOD from the preparation was determined by measuring a change in the weight. As a result, the sustained release preparation had uniform release even 30 days after the placement, exhibiting good sustained release properties. A remaining percentage of EMOD after 38 days was 28.3%. The preparation also exhibited a good release rate upon completion of 80% release of EMOD.

### Example 4

A strained release preparation was produced in accordance with Tables 1 to 3 in the same manner as in Example 1 and the release rate of EMOD from the preparation was determined by measuring a change in the weight. As a result, the sustained release preparation had uniform release even 30 days after the placement, exhibiting good sustained release properties. A remaining percentage of EMOD after 36 days was 25.1%. The preparation also exhibited a good release rate upon completion of 80% release of EMOD.

### Example 5

In a flask equipped with a stirrer, thermometer, condenser, dropping funnel and nitrogen gas inlet tube was charged 14.4 parts by weight of deionized water. The temperature was elevated to 65°C with stirring while blowing a nitrogen gas into the flask. Then, 0.2 part by weight of potassium persulfate (PPS) was added as a polymerization initiator.

In a beaker were charged 35.1 parts by weight of Z7,Z/E11-hexadecadienyl acetate (PBW: sex pheromone of pink bollworm) as a biological active substance, 15.2 parts by weight of total monomer component containing a photoinitiator (see the composition in Table 1), 4.4 parts by weight of sodium dodecyl sulfate (SDS: an anionic surfactant) and 30.7 parts by weight of deionized water. The resulting mixture was stirred with a homomixer at 10,000 rpm/min for 15 minutes at room temperature to prepare a pre-emulsion.

The pre-emulsion was added dropwise to the above-described flask over 3 hours, while keeping the temperature at 80°C. Subsequently, polymerization was performed for further 4 hours to prepare an emulsion.

To the resulting emulsion, 8.5 parts by weight of the monomer component which had been mixed in advance at the composition described in Table 2 were added dropwise and photopolymerization was performed for 1 hour to prepare a microcapsule emulsion.

Next, into the obtained microcapsule emulsion were added butyl acrylate and benzoyl peroxide (BPO, photoinitiator) in the weight ratio of 100: 0.045 in the total sum of 4.5 weight parts based on 100 weight parts of the composition used in the first step. The mixture was subjected to polymerization at 80°C for 30 minutes to produce a microcapsule emulsion. GC analysis was conducted to confirm that no monomer remained in the emulsion for completion of polymerization.

According to the composition and condition shown in Table 3, an emulsion was prepared. Then, 35 parts by weight of the resulting emulsion and 1 part by weight of the microcapsule emulsion were stirred at room temperature for 1 hour, whereby a mixture of the microcapsule emulsion which the emulsion had been added to was obtained.

In order to study its sustained release performance, the mixture was applied to a polyethylene terephthalate film and dried at 25°C for 6 hours, whereby a sustained release preparation containing 20 mg of PBW was obtained in the film form.

The resulting sustained release preparation was placed in a release tester at 30°C under wind speed of 0.7 m/sec and the release rate of PBW from the preparation was determined by measuring a change in the weight. As a result, the sustained release preparation had uniform release even 30 days after the placement, exhibiting good sustained release properties. A remaining percentage of PBW after 41 days was 20.2%. The preparation also exhibited a good release rate upon completion of 80% release of PBW.

### Comparative Example 1

In the same manner as in Example 1 except that the polymerization in the second step was omitted, a sustained release preparation was obtained. The release rate of EMOD was determined from a weight change in the same manner as in Example 1. As a result, the resulting sustained release preparation showed a high release rate at an early stage and the remaining percentage of EMOD after 10 days was 20.1%. It showed a remarkably low release life.

### Comparative Example 2

In the same manner as in Example 1 except that the amount of the biological active substance was reduced, a sustained release preparation was obtained. The release rate of EMOD was determined from a weight change in same manner as in Example 1. As a result, the resulting sustained release preparation showed relatively good sustained release properties, but the remaining percentage of EMOD after 30 days was 28.2%. Thus, compared with Example 1, the release life was shorter. The release rate upon completion of 80% release was lower.

### Comparative Example 3

In the same manner as in Example 1 except that the amount of the biological active substance was reduced, a sustained release preparation was obtained. The release rate of EMOD was determined from a weight change in same manner as in Example 1. As a result, the resulting sustained release preparation showed a high release rate at the initial stage and non-uniform release 31 days after the placement. The remaining percentage of EMOD after 31 days was 12.5%. Thus, compared with Example 1, the release life was shorter. The release rate upon completion of 80% release was lower.

### Comparative Example 4

In the same manner as in Example 1 except that the amount of the biological active substance was reduced, a sustained release preparation was obtained. The release rate of EMOD was determined from a weight change in same manner as in Example 1. As a result, the resulting sustained release preparation showed a high release rate at the initial stage. The remaining percentage of EMOD after 13 days was 8.4%. Thus, compared with Example 1, the release life was shorter. The release rate upon completion of 80% release was lower.

**Table 1**

| | Composition for the first step (weight parts) | | | | | | | |
|---|---|---|---|---|---|---|---|---|
| | solvent | functional substance | polymerization initiator | surfactant | monomer component | | | amoout of monomer based on 100 wt parts of functional substance |
| | | | | | photoinitiator | (meth)acrylate monomer Component A | multifunctional monomer Component B | |
| Example 1 | water | EMOD | ABAPH | POEAES | monomer component (12.3) | | | 34 |
| | (46.6) | (36.5) | (0.2) | (4.4) | Compound A (5) | lauryl methacrylate (99) | neopentyl glycol dimethacrylate (1) | |
| Example 2 | water | PBW | PPS | SDS | monomer component (15.2) | | | 38 |
| | (40.1) | (40.1) | (0.2) | (4.4) | Compound A (5) | 2-ethylhexyl acrylate (99) | neopentyl glycol dimethacrylate (1) | |
| Example 3 | water | EMOD | ABAPH | POEAES | monomer component (7.5) | | | 17 |
| | (44.9) | (43.0) | (0.2) | (4.4) | Compound A (5) | lauryl methacrylate (99) monomer component (17.6) | neopentyl glycol dimethacrylate (1) | |
| Example 4 | water | EMOD | ABAPH | POEAES | monomer component (17.6) | | | 88 |
| | (57.8) | (20.0) | (0.2) | (4.4) | Compound A (5) | lauryl methacrylate (99) | neopentYl glycol dimethacrylate (1) | |
| Example 5 | water | PBW | PPS | SDS | monomer component (15.2) | | | 43 |
| | (45.1) | (35.1) | (0.2) | (4.4) | Compound A (5) | lauryl methacrylate (50) butyl acrylate (49) | neopentyl glycol dimethacrylate (1) | |
| Comp.Ex.1 | water | EMOD | ABAPH | POEAES | monomer component (18.7) | | | 141 |
| | (63.0) | (13.3) | (0.3) | (4.7) | | lauryl methacrylate (55) butyl acrylate (40) | neopentyl glycol dimethacrylete (5) | |
| Comp.Ex.2 | water | EMOD | ABAPH | POEAES | monomer component (20.0) | | | 189 |
| | (65.7) | (10.6) | (0.3) | (3.4) | Compound A (5) | lauryl methacrylate (99) | neopentyl glycol dimethacrylate (1) | |
| Comp.Ex.3 | water | EMOD | ABAPH | POEAES | monomer component (17.3) | | | 99 |
| | (61.5) | (17.5) | (0.3) | (3.4) | Compound A (5) | lauryl methacrylate (99) | neopentyl glycol dimethecrylate (1) | |
| Comp.Ex.4 | water | EMOD | ABAPH | POEAES | monomer component (1.1) | | | 11 |
| | (84.9) | (10.3) | (0.3) | (3.4) | Compound A (5) | lauryl methacrylate (99) | neopentyl glycol dimethacrylate (1) | |

**Table 2**

| | Composition for the second step | | |
|---|---|---|---|
| | monomer component (weight parts based on 100 weight parts of composition used in the first step) | | |
| | monomer component C capable for forming hydrophilic polymer | monomer component D | multifuntional monomer component E |
| Example 1 | monomer component (12.9) | | |
| | sodium acrylamide 2-methylpropane sulfate (1) | butyl acrylate (90) | neopentyl gylcol dimethacrylate (9) |
| Example 2 | monomer component (13.0) | | |
| | sodium acrylamide 2-methylpropane sulfate (1) | butyl acrylate (90) | neopentyl gylcol dimethacrylate (9) |
| Example 3 | monomer component (12.9) | | |
| | sodium acrylamide 2-methylpropane sulfate (1) | butyl acrylate (90) | neopentyl gylcol dimethacrylate (9) |
| Example 4 | monomer component (12.9) | | |
| | sodium acrylamide 2-methylpropane sulfate (1) | butyl acrylate (90) | neopentyl gylcol dimethacrylate (9) |
| Example 5 | monomer component (13.0) | | |
| | sodium acrylamide 2-methylpropane sulfate (1) | butyl acrylate (90) | neopentyl gylcol dimethacrylate (9) |
| Comparative Example 2 | monomer component (10.4) | | |
| | sodium acrylamide 2-methylpropane sulfate (1) | butyl acrylate (90) | neopentyl gylcol dimethacrylate (9) |
| Comparative Example 3 | monomer component (10.4) | | |
| | sodium acrylamide 2-methylpropane sulfate (1) | butyl acrylate (90) | neopentyl gylcol dimethacrylate (9) |
| Comparative Example 4 | monomer component (10.4) | | |
| | sodium acrylamide 2-methylpropane sulfate (1) | butyl acrylate (90) | neopentyl gylcol dimethacrylate (9) |

**Table 3**

| | condition for preparing an emulsion to be added | | | | | | solid concentration of emulsion | ratio of added emulsion to multilayered microcapsule | released amount of effective component |
|---|---|---|---|---|---|---|---|---|---|
| | solvent | polymerization initiator | surfactant | monomer | polymerization temperature | polymerization time | | | |
| | (wt parts) | (wt parts) | (wt parts) | (wt parts) | (°C) | (hours) | (wt%) | | (wt%) |
| Example 1 | water (65.0) | ABAPH (1.0) | POEAES (1.5) | lauryl methacrylate (32.5) | 75 | 4 | 35.0 | 17 | 1.9 |
| Example 2 | water (65.0) | ABAPH (1.0) | POEAES (1.5) | lauryl methacrylate (32.5) | 75 | 4 | 35.0 | 19 | 1.9 |
| Example 3 | water (65.0) | ABAPH (1.0) | POEAES (1.5) | lauryl methacrylate (32.5) | 75 | 4 | 35.0 | 20 | 1.9 |
| Example 4 | water (50.0) | APS (1.0) | POEAES (1.5) | lauryl acrylate (47.5) | 75 | 4 | 50.0 | 9 | 1.9 |
| Exemple 5 | water (65.0) | ABAPH (1.0) | POEAES (1.5) | lauryl acrylate (32.5) | 75 | 4 | 35. 0 | 16 | 1.9 |
| Comp.Ex.1 | water (50.0) | APS (1.0) | POEAES (1.5) | lauryl acrylate (47.5) | 75 | 4 | 50.0 | 7 | 1.9 |
| comp.Ex.2 | water (40.0) | PPS (0.5) | SDS (3.0) | 2-ethylhexyl acrylate (56.5) | 70 | 4 | 60.0 | 5 | 1.9 |
| Comp.Ex.3 | water (65.0) | ABAPH (1.0) | POEAES (1.5) | lauryl acrylate (32.5) | 75 | 4 | 35.0 | 8 | 1.9 |
| Comp.Ex.4 | water (65.0) | ABAPH (1.0) | POEAES (1.5) | lauryl acrylate (32.5) | 75 | 4 | 35.0 | 5 | 1.9 |

## Claims

1. A microcapsule emulsion comprising:
an emulsion particle formed by emulsion polymerization of a total amount of 15 to 90 parts by weight of a first monofunctional alkyl (meth)acrylate ester and a first multifunctional (meth)acrylate ester in the presence of 100 parts by weight of a biological active substance, and
a coated layer on the emulsion particle, the layer being formed by emulsion polymerization of a total amount of 20 to 200 parts by weight of a second monofunctional alkyl (meth)acrylate ester and a second multifunctional (meth)acrylate ester in the presence of the emulsion particle,
wherein difference in carbon numbers between an alkyl group of the first monofunctional alkyl (meth)acrylate ester and an alkyl group of the second monofunctional alkyl (meth)acrylate ester is from 3 to 17.

2. The microcapsule emulsion according to Claim 1, wherein said alkyl group of the first monofunctional alkyl (meth)acrylate ester has a carbon number of 4 to 20, and said alkyl group of the second monofunctional alkyl (meth)acrylate ester has a carbon number of 1 to 8.

3. The microcapsule emulsion according to any one of Claims 1 or Claim 2 wherein an emulsion containing no biological active substance is added to said microcapsule emulsion.

4. A method for producing a microcapsule emulsion comprising:
a first step of forming an emulsion particle by emulsion polymerization of a total amount of 15 to 90 parts by weight of a first monofunctional alkyl (meth)acrylate ester and a first multifunctional (meth)acrylate ester in the presence of 100 parts by weight of a biological active substance,
a second step of forming on the emulsion particle a coated layer by emulsion polymerization of a total amount of 20 to 200 parts by weight of a second monofunctional alkyl (meth)acrylate ester and a second multifunctional (meth)acrylate ester in the presence of the emulsion particle,
wherein difference in carbon numbers between an alkyl group of the first monofunctional alkyl (meth)acrylate ester and an alkyl group of the second alkyl monofunctional (meth)acrylate ester is from 3 to 17.

5. A method for producing a microcapsule emulsion according to Claim 4, comprising, subsequently to said second step, a third step of further coating said coated layer by emulsion polymerization of a total amount of 20 to 200 parts by weight of a third monofunctional alkyl (meth)acrylate ester and a third multifunctional (meth)acrylate ester.

6. The method for producing a microcapsule emulsion according to Claim 4, further comprising another step of adding to said microcapsule emulsion produced in the second step a biological active substance-free emulsion having a weight of 1 to 40 times the weight of the microcapsule emulsion produced in the second step.

7. The method for producing a microcapsule emulsion according to Claim 5, further comprising another step of adding to said microcapsule emulsion produced in the third step a biological active substance-free emulsion having a weight of 1 to 40 times the weight of the microcapsule emulsion produced in the third step.

8. The method for producing a microcapsule emulsion according to any one of Claims 4 to 7, wherein a photopolymerization initiator is added in said first step.

## Patentansprüche

1. Mikrokapselemulsion, umfassend:
einen Emulsionspartikel, gebildet durch die Emulsionspolymerisierung einer Gesamtmenge von 15 bis 90 Gewichtsteilen eines ersten monofunktionellen Alkyl (meth)acrylatesters und eines ersten multifunktionellen (Meth)acrylatesters in Anwesenheit von 100 Gewichtsteilen einer biologisch aktiven Substanz, und
eine Beschichtungslage auf dem Emulsionspartikel, wobei die Lage durch Emulsionspolymerisierung einer Gesamtmenge von 20 bis 200 Gewichtsteilen eines zweiten monofunktionellen Alkyl (meth)acrylatesters und eines zweiten multifunktionellen (Meth)acrylatesters in Anwesenheit des Emulsionspartikels gebildet wird,
wobei die Differenz der Kohlenstoffzahlen zwischen einer Alkylgruppe des ersten monofunktionellen Alkyl (meth)acrylatesters und einer Alkylgruppe des zweiten monofunktionellen Alkyl (meth)acrylatesters zwischen 3 und 17 liegt.

2. Mikrokapselemulsion nach Anspruch 1, wobei die Alkylgruppe des ersten monofunktionellen Alkyl (meth)acrylatesters eine Kohlenstoffzahl zwischen 4 und 20 aufweist und die Alkylgruppe des zweiten monofunktionellen Alkyl (meth)acrylatesters eine Kohlenstoffzahl zwischen 1 und 8 aufweist.

3. Mikrokapselemulsion nach einem von Anspruch 1 oder Anspruch 2, wobei eine Emulsion, die keine biologisch aktive Substanz enthält, der Mikrokapselemulsion hinzugefügt wird.

4. V e r f a h r e n z u r Herstellung einer Mikrokapselemulsion, umfassend:
einen ersten Schritt des Bildens eines Emulsionspartikels durch Emulsionspolymerisierung einer Gesamtmenge von 15 bis 90 Gewichtsteilen eines ersten monofunktionellen Alkyl (meth)acrylatesters und eines ersten multifunktionellen (Meth)acrylatesters in Anwesenheit von 100 Gewichtsteilen einer biologisch aktiven Substanz, und
einen zweiten Schritt des Bildens auf dem Emulsionspartikel einer Beschichtungslage durch Emulsionspolymerisierung einer Gesamtmenge von 20 bis 200 Gewichtseilen eines zweiten monofunktionellen Alkyl (meth)acrylatesters und eines zweiten multifunktionellen (Meth)acrylatesters in Anwesenheit des Emulsionspartikels,
wobei die Differenz der Kohlenstoffzahlen zwischen einer Alkylgruppe des ersten monofunktionellen Alkyl (meth)acrylatesters und einer Alkylgruppe des zweiten monofunktionellen Alkyl (meth)acrylatesters zwischen 3 und 17 liegt.

5. Verfahren zur Herstellung einer Mikrokapselemulsion nach Anspruch 4, umfassend, folgend auf den zweiten Schritt, einen dritten Schritt des weiteren Beschichtens der beschichteten Lage durch Emulsionspolymerisierung einer Gesamtmenge von 20 bis 200 Gewichtsteilen eines dritten monofunktionelle Alkyl (meth)acrylatesters und eines dritten multifunktionellen (Meth)acrylatesters.

6. Verfahren zur Herstellung einer Mikrokapselemulsion nach Anspruch 4, weiter umfassend einen weiteren Schritt des Hinzufügens zu der Mikrokapselemulsion, hergestellt im zweiten Schritt, einer biologisch aktiven, substanzfreien Emulsion mit einem Gewicht von 1 bis 40 Mal dem Gewicht der Mikrokapselemulsion, hergestellt im zweiten Schritt.

7. Verfahren zur Herstellung einer Mikrokapselemulsion nach Anspruch 5, weiter umfassend einen weiteren Schritt des Hinzufügens zu der Mikrokapselemulsion, hergestellt im dritten Schritt, einer biologisch aktiven, substanzfreien Emulsion mit einem Gewicht von 1 bis 40 Mal dem Gewicht der Mikrokapselemulsion, hergestellt im dritten Schritt.

8. Verfahren zur Herstellung einer Mikrokapselemulsion nach einem der Ansprüche 4 bis 7, wobei ein Photopolymerisationsinitiator in dem ersten Schritt hinzugefügt wird.

## Revendications

1. Emulsion de microcapsules comprenant :
une particule d'émulsion formée par la polymérisation en émulsion d'une quantité totale de 15 à 90 parts en poids d'un premier ester de (méth)acrylate d'alkyle monofonctionnel et d'un premier ester de (méth)acrylate multifonctionnel en la présence de 100 parts en poids d'une substance biologique active, et
une couche de revêtement sur la particule d'émulsion, la couche étant formée par la polymérisation en émulsion d'une quantité totale de 20 à 2 0 0 parts en poids d'un deuxième ester de (méth)acrylate d'alkyle monofonctionnel et d'un deuxième ester de (méth)acrylate multifonctionnel en présence de la particule d'émulsion,
dans laquelle la différence du nombre d'atomes de carbone entre un groupe alkyle du premier ester de (méth)acrylate d'alkyle monofonctionnel et un groupe alkyle du deuxième ester de (méth)acrylate d'alkyle monofonctionnel est de 3 à 17.

2. Emulsion de microcapsules selon la revendication 1, dans laquelle ledit groupe alkyle du premier ester de (méth)acrylate d'alkyle monofonctionnel a un nombre d'atomes de carbone allant de 4 à 20, et ledit groupe alkyle du deuxième ester de (méth)acrylate d'alkyle monofonctionnel a un nombre d'atomes de carbone allant de 1 à 8.

3. Emulsion de microcapsules selon l'une quelconque des revendications 1 ou 2, dans laquelle une émulsion ne contenant pas de substance biologique active est ajoutée à ladite émulsion de microcapsules.

4. Procédé de préparation d'une émulsion de microcapsules comprenant :
une première étape de formation d'une particule d'émulsion par polymérisation en émulsion d'une quantité totale de 15 à 90 parts en poids d'un premier ester de (méth)acrylate d'alkyle monofonctionnel et d'un premier ester de (méth)acrylate multifonctionnel en la présence de 100 parts en poids d'une substance biologique active,
une deuxième étape de formation sur la particule d'émulsion d'une couche de revêtement par polymérisation en émulsion d'une quantité totale de 20 à 200 parts en poids d'un deuxième ester de (méth)acrylate d'alkyle monofonctionnel et d'un deuxième ester de (méth)acrylate multifonctionnel en la présence de la particule d'émulsion,
dans lequel la différence du nombre d'atomes de carbone entre un groupe alkyle du premier ester de (méth)acrylate d'alkyle monofonctionnel et un groupe alkyle du deuxième ester de (méth)acrylate d'alkyle monofonctionnel est de 3 à 17.

5. Procédé de préparation d'une émulsion de microcapsules selon la revendication 4, comprenant, suite à ladite deuxième étape, une troisième étape consistant à revêtir en outre ladite couche de revêtement par polymérisation en émulsion d'une quantité totale de 20 à 200 parts en poids d'un troisième ester de (méth)acrylate d'alkyle monofonctionnel et d'un troisième ester de (méth)acrylate multifonctionnel.

6. Procédé de préparation d'une émulsion de microcapsules selon la revendication 4, comprenant en outre une autre étape d'ajout à ladite émulsion de microcapsules, préparée dans la deuxième étape, d'une émulsion sans substance biologique active ayant un poids de 1 à 40 fois le poids de l'émulsion de microcapsules préparée dans la deuxième étape.

7. Procédé de préparation d'une émulsion de microcapsules selon la revendication 5, comprenant en outre une autre étape d'ajout à ladite émulsion de microcapsules, préparée dans la troisième étape, d'une émulsion sans substance biologique active ayant un poids de 1 à 40 fois le poids de l'émulsion de microcapsules préparée dans la troisième étape.

8. Procédé de préparation d'une émulsion de microcapsules selon l'une quelconque des revendications 4 à 7, dans lequel un initiateur de photopolymérisation est ajouté dans ladite première étape.
